# EUROPÄISCHE PATENTSCHRIFT

(11) **EP 2 682 689 B1**
(45) Veröffentlichungstag und Bekanntmachung des Hinweises auf die Patenterteilung: **09.12.2015**
(21) Anmeldenummer: 13169776.5
(22) Anmeldetag: 29.05.2013
(51) Int. Cl.: F24J 3/08, F03G 7/04, E21B 41/00

(54) **Erzeugung elektrischer Energie aus Erdwärme**
Generation of electrical energy from geothermal energy
Production d'énergie électrique à partir de la géothermie

(30) Priorität: 05.06.2012 DE 102012104873
(43) Veröffentlichungstag der Anmeldung: 08.01.2014
(73) Patentinhaber: Rohöl - Aufsuchungs AG, 1015 Wien (AT)
(72) Erfinder: Heitzendorfer, Stefan, 4552 Wartberg an der Krems (AT); Doppelreiter, David, 2700 Wien (AT)
(74) Vertreter: Kloiber, Thomas

(56) Entgegenhaltungen:
- EP-A2- 0 238 337
- US-A1- 2008 047 753
- US-A1- 2009 260 358

## Beschreibung

Die Erfindung betrifft eine Vorrichtung zur Erzeugung elektrischer Energie aus Erdwärme, mit mindestens einer Wärmekraftmaschine, die aus einem untertage befindlichen Wärmereservoir zugeführte Wärme teilweise in mechanische Energie und mit einem Kühlmittelkreislauf zur Bereitstellung einer Temperaturdifferenz für einen thermodynamischen Kreisprozess verbunden ist umwandelt, und mit mindestens einem durch die mindestens eine Wärmekraftmaschine angetriebenen elektrischen Generator.

Aus US 2009/0260358 A1 ist eine solche Vorrichtung gemäß dem Oberbegriff des Anspruchs bekannt. Dabei ist die Vorrichtung am Meeresgrund im Bereich einer Erdöl angeordet. Das durch eine Förderleitung geförderte heiße Erdölquelle dient zur Wärmezufuhr und das Meerwasser zur Wärmeabfuhr. Bei einer aus der DE 10 2009 021 160 B4 bekannten Vorrichtung reicht ein Rohr in einer Bohrung bis zu einer unterirdischen Salzlagerstätte. Durch das Rohr wird Wasser in die Salzlagerstätte eingebracht und diese ausgesolt. Die Sole wird über ein weiteres Rohr nach übertage gefördert und gibt dort in einem Wärmetauscher ihre Wärme ab, wobei in einem Rankine-Kreislauf erzeugter Dampf eine Turbine und diese einen elektrischen Generator zur Erzeugung von Strom antreibt.

Aufgabe der Erfindung ist es, eine Vorrichtung der eingangs genannten Art anzugeben, die bei geringem Aufwand die Erdwärme möglichst effizient nutzt. Die Aufgabe wird durch das Kennzeichen des Anspruchs 1 gelöst.

Erfindungsgemäß wird diese Aufgabe dadurch gelöst, dass die mindestens eine Wärmekraftmaschine und Generator untertage in einem Bohrloch oder einer Kaverne angeordnet sind und dass kaltes Kühlmittel über eine Kühlmittelzuleitung von übertage zur Wärmekraftmaschine untertage und erwärmtes Kühlmittel von untertage über eine Kühlmittelrückleitung nach übertage gefördert wird und dass die elektrische Energie über elektrische Kabel zu Verbrauchern nach übertage geleitet wird. Durch die Nutzung der Wärmeenergie unter Tage direkt in dem Bereich, wo sie auftritt, hat man den Vorteil, dass Verluste durch Rohrleitungen von der eigentlichen Wärmequelle untertage zur übertage aufgestellten Wärmekraftmaschine vermieden werden. Die Wärmeenergie kann daher viel effektiver mit hohem Wirkungsgrad genutzt werden. Dabei entstehen praktisch keine schädlichen EmissionenThermodynamische Kreisprozesse arbeiten umso effektiver, je größer der Temperaturunterschied der beiden mit der Wärmekraftmaschine verbundenen Wärmereservoirs ist. Durch den erfindungsgemäßen Kühlmittelkreislauf wird die Temperaturdifferenz vergrößert und damit der Wirkungsgrad der Wärmekraftmaschine erhöht. Diese kann einen größeren Anteil der Wärmeenergie in mechanische Energie umwandeln. Das erwärmte Kühlmittel hat eine geringere Dichte als das kalte Kühlmittel. Daher wird das erwärmte Kühlmittel in der Kühlmittelrückleitung durch das dichtere kalte Kühlmittel in der Zuleitung nach oben gedrückt, sodass ein Kühlmittelfluss auch ohne besondere Kühlmittelpumpe zustande kommt oder zumindest aufrecht erhalten werden kann.

In Ausgestaltung der Erfindung wird vorgeschlagen, dass die Wärmekraftmaschine ein Stirlingmotor ist. Die Technik des Stirlingmotors ist robust und ausgereift. Sie eignet sich daher besonders gut für die vorliegenden Zwecke, insbesondere wenn die Temperatur des unterirdischen Wärmereservoirs relativ hoch liegt.

In einer alternativen Ausführungsform wird eine andere Art von Wärmekraftmaschine empfohlen, die Niedertemperatur-Verdampfungsprozesse nutzt, insbesondere den Organic Rankine Cycle (ORC) oder den Kalina-Prozess, wobei alle Phasen des jeweiligen Prozesses einschließlich der Rückkühlung des jeweiligen Verdampfungsmediums in einem Kondensator komplett in einem geschlossenen System untertage ablaufen. Bei den genannten ORC oder Kalina-Prozessen wird jeweils ein Medium verdampft, welches zum Antrieb einer mechanischen Maschine, insbesondere einer Turbine dienen kann. Anschließend wird das Verdampfungsmedium in einem Kondensator durch Kühlen wieder verflüssigt. Die genannten Prozesse haben den Vorteil, dass sie auch bei relativ niedrigen Temperaturen ablaufen und mechanische Energie liefern, die dann in elektrische Energie umgewandelt werden kann.

Die Erfindung kann noch verbessert werden, indem sowohl ein Stirlingmotor als auch eine Wärmekraftmaschine auf der Basis eines Niedertemperatur-Verdampfungsprozesses untertage und im Wärmefluss seriell hintereinander angeordnet sind. Auf diese Weise kann die Wärme aus Geothermie auf einem höheren Temperaturniveau zunächst im Stirlingmotor teilweise in mechanische Energie umgesetzt werden, um dann auf niedrigerem Temperaturniveau in der anderen Wärmekraftmaschine auf der Basis eines Niedertemperatur-Verdampfungsprozesses weitere mechanische Energie und schließlich elektrische Energie zu erzeugen. Auf diese Weise wird letztendlich aus der vorhandenen Wärmeenergie mehr elektrische Energie erzeugt und die Vorrichtung ist daher noch effizienter.

Um den Kühlmittelfluss zunächst einmal in Gang zu bringen oder eine bestimmte Flussmenge pro Zeiteinheit aufrechtzuerhalten, kann die Anordnung einer Kühlmittelpumpe vorteilhaft sein. Ist die Kühlmittelpumpe übertage angeordnet, kann sie auf einfache Weise bedient und gewartet werden. Bei einer Anordnung der Kühlmittelpumpe untertage kann diese mit Vorteil direkt durch die Wärmekraftmaschine mechanisch angetrieben werden, ohne den Umweg über die Erzeugung elektrischer Energie in einem Generator und die Rückwandlung elektrischer in mechanische Energie in einem Pumpenmotor. Der direkte Antrieb ist daher effizienter und der verbleibende nutzbare Anteil der erzeugten elektrischen Energie ist größer als bei einer Anordnung der Pumpe übertage.

Die Gesamtenergiebilanz der erfindungsgemäßen Vorrichtung kann noch gesteigert werden, indem die vom Kühlmittel übertage abgegebene Wärme genutzt wird, vorzugsweise zum Heizen in einem Fernwärmenetz. Diese Wärme fällt ohne zusätzliche Kosten an und wird ohne jegliche schädliche Emissionen gewonnen.

In einer besonders vorteilhaften Ausführungsform der Erfindung sind zwei konzentrisch angeordnete Rohre im Bohrloch für den Kühlmitteltransport vorgesehen, wobei ein zwischen einem inneren Rohr und einem äußeren Rohr gebildeter innerer Ringraum mit einem wärmeisolierenden Material, vorzugsweise Gas, insbesondere Luft, gefüllt ist, wobei ein zwischen dem äußeren Rohr und der inneren Verkleidung des Bohrlochs gebildeter äußerer Ringraum als Kühlmittelrücklauf zum Aufstieg des erwärmten Kühlmittels von untertage nach übertage dient und das kalte Kühlmittel von übertage nach untertage durch das als Kühlmittelzulauf dienende innere Rohr fließt. Durch den wärmeisolierenden inneren Ringraum wird ein Wärmeübergang vom Kühlmittelrücklauf auf den Kühlmittelzulauf verhindert. Die Ausführungsform mit den zwei konzentrisch angeordneten Rohren im Bohrloch ist besonders einfach und kostengünstig realisierbar.

In Ausgestaltung der letztgenannten Ausführungsform wird vorgeschlagen, dass in dem inneren Ringraum zwischen dem inneren Rohr und dem äußeren Rohr mehrere Abstandhalter angeordnet sind, die eine direkte Berührung der Rohre verhindern. Die Abstandhalter können auch auf einfache Weise aus einer Rohrklemme bestehen, die auf dem inneren Rohr angebracht ist und radial vorstehende Vorsprünge aufweist, an denen die Innenfläche des äußeren Rohres anliegen kann, wobei das im inneren Ringraum vorgesehene wärmeisolierende Material, insbesondere Gas, in Rohrrichtung ohne Weiteres an den Abstandhaltern vorbeifließen kann. Die Abstandhalter sind vorzugsweise in regelmäßigen vertikalen Abständen zueinander angeordnet, wobei Abstände von 3 m empfohlen werden.

Um ein Austreten des wärmeisolierenden Materials aus dem inneren Ringraum oder ein Eindringen von Kühlflüssigkeit oder sonstigen Materialien in den inneren Ringraum zu verhindern, wird vorgeschlagen, dass der innere Ringraum im unteren Endbereich der Rohre durch eine zwischen den Rohren angeordnete Dichtung abgedichtet ist. Eine solche Dichtung kann ohne besonderen Aufwand beim Einführen der Rohre in das Bohrloch angebracht werden.

In einer besonders vorteilhaften Ausführungsform ist die erfindungsgemäße Vorrichtung in einer nicht mehr für Förderzwecke verwendeten früheren Förderbohrung der Erdgas- oder Erdölindustrie untergebracht. Die Erdgas- und Erdölindustrie hinterlässt eine Vielzahl von offen gelassenen Bohrungen, die aufgrund mangelnder Wirtschaftlichkeit keine Kohlenwasserstoffe mehr produzieren. Diese Bohrungen können aber noch als Wärmequelle dienen. Dabei kann die vorliegende Erfindung die so entstandenen Wärmequellen auf besonders wirtschaftliche Weise nutzen, denn es entstehen keine zusätzlichen Kosten für die Erzeugung der Bohrungen.

Die Erfindung kann aber ebenso mit Vorteil in einer in Produktion befindlichen Bohrung, insbesondere der Erdgas- oder Erdölindustrie untergebracht sein. Dabei kann der untertage erzeugte Strom direkt untertage für den Betrieb von Ventilen oder Pumpen genutzt werden, die für die Erdgas- oder Erdölförderung dienen.

Ein Ausführungsbeispiel der Erfindung wird nachfolgend anhand der Zeichnungen näher erläutert.

Die Figuren der Zeichnung zeigen im Einzelnen:
- Figur 1:: eine schematische Darstellung eines Bohrlochs im Schnitt mit einer erfindungsgemäßen Vorrichtung zur Erzeugung elektrischer Energie aus Erdwärme;
- Figur 2:: eine vergrößerte Teilansicht eines Abschnitts des Bohrlochs von Figur 1.

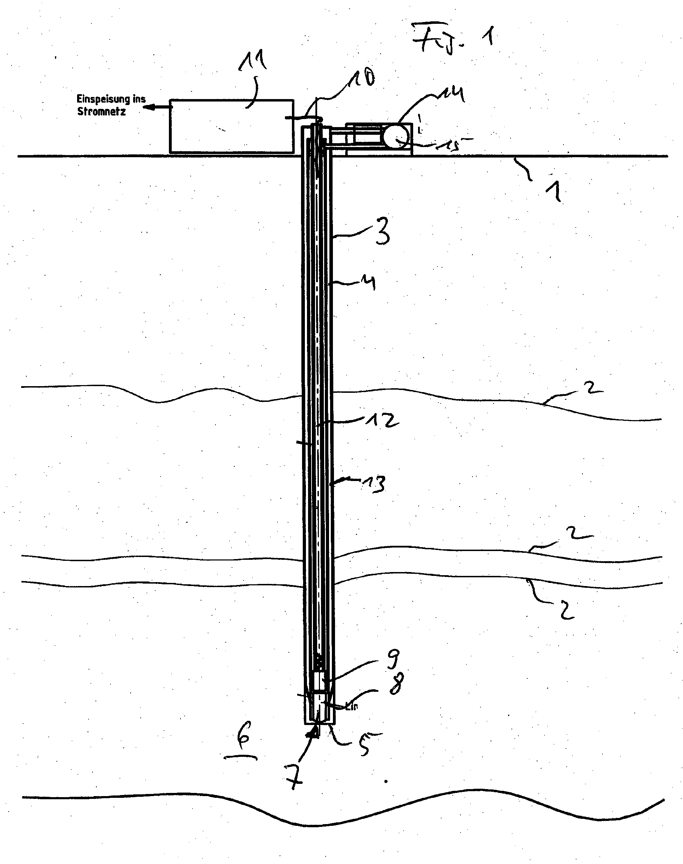

In Figur 1 erkennt man die Erdoberfläche 1 und verschiedene Gesteinsschichtgrenzen 2 sowie ein Bohrloch 3, welches von über Tage bis tief unter die Erdoberfläche 1 nach unter Tage reicht. Das Bohrloch 3 ist auf seiner Innenseite mit einer Verkleidung 4 versehen, die als Armierung zur Befestigung des Bohrlochs 3 dient. Die Gesteinsschicht im Bereich des unteren Endes 5 dient als Wärmereservoir 6 für Erdwärme, aus der die erfindungsgemäße Vorrichtung 7 elektrische Energie erzeugt.

Als Wärmekraftmaschine dient hier ein Stirlingmotor 8, der einen Generator 9 antreibt. Die Vorrichtung zur Energieerzeugung 7 mit Stirlingmotor 8 und Generator 9 ist komplett unter Tage im Bereich des unteren Endes 5 des Bohrlochs im Bohrloch 3 untergebracht. Die vom Generator 9 erzeugte elektrische Energie wird über ein elektrisches Kabel 10 zu einem Umformer 11 übertage und von dort zu den Verbrauchern geleitet.

Statt eines Stirlingmotors 9 oder in Ergänzung eines Stirlingmotors kann die Vorrichtung zur Energieerzeugung 7 auch eine auf der Basis eines Niedertemperatur-Verdampfungsprozesses arbeitende Wärmekraftmaschine untertage aufweisen, die im Wärmefluss seriell nach dem Stirlingmotor 8 angeordnet ist.

Der Stirlingmotor 8 ist mit einem Kühlmittelkreislauf zur Bereitstellung einer möglichst großen Temperaturdifferenz verbunden, um für den thermodynamischen Kreisprozess einen möglichst hohen Wirkungsgrad zu erzielen. Kaltes Kühlmittel kommt von einem übertage angeordneten Wärmetauscher 14 mit Kühlmittelpumpe 15 und gelangt durch einen Kühlmittelzulauf 12 durch das Bohrloch 3 nach untertage zum Stirlingmotor 8. Das untertage erwärmte Kühlmittel gelangt durch einen Kühlmittelrücklauf 13 durch das Bohrloch nach übertage zurück zum Wärmetauscher 14. In einer anderen Ausführungsform kann die Kühlmittelpumpe 15 statt übertage beim Wärmetauscher 14 auch untertage beim Stirlingmotor 8 angeordnet und direkt mechanisch vom Stirlingmotor 8 angetrieben werden.

Die im Wärmetauscher 14 übertage anfallende Wärme wird in einem Fernwärmenetz an Verbraucher zum Heizen weitergeleitet.

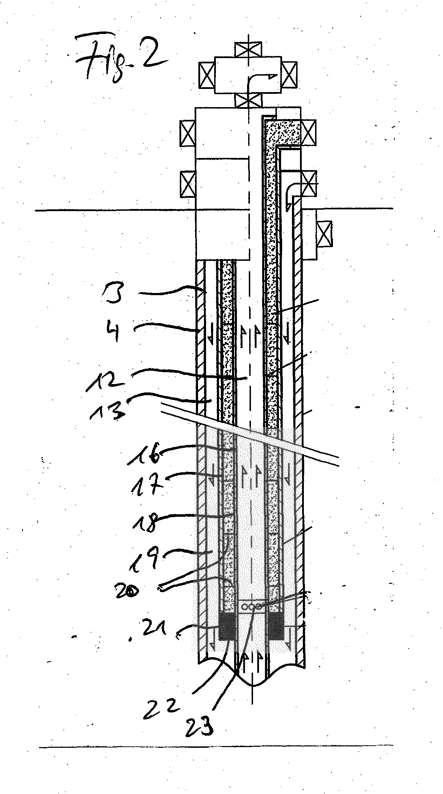

Wie man am besten in Figur 2 erkennt, sind im Bohrloch 3 zwei konzentrische Rohre 16, 17 für den Kühlmitteltransport angeordnet. Zwischen einem inneren Rohr 16 und einem äußeren Rohr 17 ist ein innerer Ringraum 18 gebildet, der mit einem wärmeisolierenden Material, im vorliegenden Fall mit Luft, gefüllt ist. Zwischen dem äußeren Rohr 17 und der inneren Verkleidung 4 des Bohrlochs 3 gibt es einen äußeren Ringraum 19, der als Kühlmittelrücklauf 13 zum Aufstieg des erwärmten Kühlmittels von untertage nach übertage dient. Das vom Wärmetauscher 14 kommende kalte Kühlmittel gelangt von übertage nach untertage durch das als Kühlmittelzulauf 12 dienende innere Rohr 16. Zwischen dem inneren Rohr 16 und dem äußeren Rohr ist in regelmäßigen Abständen von 3 m jeweils ein Abstandhalter 20 vorgesehen. Die Abstandhalter 20 bestehen aus Klemmen, die auf dem inneren Rohr 16 angebracht sind und eine Berührung der Außenfläche des inneren Rohrs 16 mit der Innenfläche des äußeren Rohrs 17 verhindern. Im Endbereich 21 des äußeren Rohrs 17 ist eine Dichtung 22 vorgesehen, die den inneren Ringraum 18 zwischen dem inneren Rohr 16 und dem äußeren Rohr 17 abdichtet, so dass die im inneren Ringraum 18 befindliche Luft nicht austreten kann und außerdem auch kein Kühlmittel in den inneren Ringraum 18 eintreten kann.

Für die Bereitstellung von Kühlmittelzulauf und Kühlmittelrücklauf wird vorgeschlagen, zunächst eine erste Rohrtour 17, bestehend aus 4 ½" Tubing aus Kohlenstoffstahl von 9 m Länge, mittels einer Winde in den mit Flüssigkeit gefüllten Hohlraum des Bohrlochs 3 abzuhängen und dann eine zweite Rohrtour 16, bestehend aus 2 3/8" Tubing aus Kohlenstoffstahl mit einer Länge von 9 m, ebenfalls mit einer Winde, abzuhängen. Dabei wird auf der zweiten Rohrtour in gleichbleibenden Abständen von 3 m Abstandhalter angebracht, um die direkte Berührung der beiden Stahlrohre zu verhindern. Am unteren Ende der zweiten Rohrtour ist ein 2 3/8" Packer als Dichtung 22 und ein 2 3/8" Sidedoor 23 vorgesehen. Beim Abhängen der zweiten Rohrtour wird der Packer 22 mit der ersten Rohrtour 17 gasdicht verschlossen. Anschließend wird das installierte Sidedoor 23 geöffnet und mit Hilfe eines unter Druck stehenden Gases der mit Flüssigkeit gefüllte Ringraum 18 zwischen der ersten Rohrtour 17 und der zweiten Rohrtour 16 auszirkuliert. Nachdem die gesamte Flüssigkeit aus dem Ringraum 18 auszirkuliert wurde, wird das Sidedoor 23 geschlossen. Der in dem Zwischenraum 18 befindliche Gasdruck wird auf 4 bar entspannt und zur Beobachtung der Dichtheit über einige Zeit beibehalten. Nach Ablauf dieses Zeitraumes wird der Gasdruck auf "absolut" 1 bar reduziert.

### BEZUGSZEICHENLISTE

- 1: Erdoberfläche
- 2: Gesteinsschichtgrenzen
- 3: Bohrloch
- 4: Verkleidung
- 5: unteres Ende
- 6: Wärmereservoir
- 7: Vorrichtung zur Energieerzeugung
- 8: Stirlingmotor
- 9: Generator
- 10: elektrisches Kabel
- 11: Umformer
- 12: Kühlmittelzulauf
- 13: Kühlmittelrücklauf
- 14: Wärmetauscher
- 15: Kühlmittelpumpe
- 16: inneres Rohr
- 17: äußeres Rohr
- 18: innerer Ringraum
- 19: äußerer Ringraum
- 20: Abstandhalter
- 21: Endbereich
- 22: Dichtung
- 23: Sidedoor

## Patentansprüche

1. Vorrichtung zur Erzeugung elektrischer Energie aus Erdwärme, mit mindestens einer Wärmekraftmaschine (8), die aus einem untertage befindlichen Wärmereservoir zugeführte Wärme teilweise in mechanische Energie umwandelt und mit einem Kühlmittelkreislauf (12, 13, 14, 15) zur Bereitstellung einer Temperaturdifferenz für einen thermodynamischen Kreisprozess verbunden ist., und mit mindestens einem durch die mindestens eine Wärmekraftmaschine angetriebenen elektrischen Generator (9), wobei die mindestens eine Wärmekraftmaschine (8) und Generator (9) untertage in einem Bohrloch (3) oder einer Kaverne angeordnet sind, und dass die elektrische Energie über elektrische Kabel (10) zum Verbraucher nach übertage geleitet wird, **dadurch gekennzeichnet dass** kaltes Kühlmittel von übertage über eine Kühlmittelzuleitung (12) zur Wärmekraftmaschine (8) untertage und erwärmtes Kühlmittel von untertage über eine Kühlmittelrückleitung (13) nach übertage gefördert wird.

2. Vorrichtung nach Anspruch 1. **dadurch gekennzeichnet, dass** die Wärmekraftmaschine ein Stirlingmotor (8) ist.

3. Vorrichtung nach Anspruch 1, **dadurch gekennzeichnet, dass** die Wärmekraftmaschine Niedertemperatur-Verdampfungsprozesse nutzt, insbesondere den Organic Rankine Cycle (ORC) oder den Kalina-Prozess, und dass alle Phasen des jeweiligen Prozesses einschließlich der Rückkühlung des jeweiligen Verdampfungsmediums in einem Kondensator komplett im einen geschlossenen System untertage ablaufen.

4. Vorrichtung nach einem der Ansprüche 2-3, **dadurch gekennzeichnet, dass** sowohl ein Stirlingmotor (8) als auch eine auf der Basis eines Niedertemperatur-Verdampfungsprozesses arbeitende Wärmekraftmaschine untertage und im Wärmefluss seriell hintereinander angeordnet sind.

5. Vorrichtung nach einem der vorhergehenden Ansprüche, **dadurch gekennzeichnet, dass** eine Kühlmittelpumpe (15) übertage angeordnet ist.

6. Vorrichtung nach einem der Ansprüche 1 bis 4, **dadurch gekennzeichnet, dass** eine Kühlmittelpumpe untertage angeordnet ist.

7. Vorrichtung nach Anspruch 6, **dadurch gekennzeichnet, dass** die Kühlmittelpumpe untertage direkt durch die Wärmekraftmaschine mechanisch angetrieben wird.

8. Vorrichtung nach einem der vorhergehenden Ansprüche, **dadurch gekennzeichnet, dass** die vom Kühlmittel übertage abgegebene Wärme genutzt wird, vorzugsweise zum Heizen in einem Fernwärmenetz.

9. Vorrichtung nach einem der vorhergehenden Ansprüche, **dadurch gekennzeichnet, dass** zwei konzentrisch angeordnete Rohre (16, 17) im Bohrloch (3) für den Kühlmitteltransport vorgesehen sind, wobei ein zwischen einem inneren Rohr (16) und einem äußeren Rohr (17) gebildeter innerer Ringraum (18) mit einem wärmeisolierenden Material, vorzugsweise Gas, insbesondere Luft, gefüllt ist, wobei ein zwischen dem äußeren Rohr (17) und der inneren Verkleidung (4) des Bohrlochs (3) gebildeter äußerer Ringraum als Kühlmittelrücklauf (13) zum Aufstieg des erwärmten Kühlmittels von untertage nach übertage dient und das kalte Kühlmittel von übertage nach untertage durch das als Kühlmittelzulauf (12) dienende innere Rohr (16) fließt.

10. Vorrichtung nach Anspruch 9, **dadurch gekennzeichnet, dass** in dem inneren Ringraum zwischen dem inneren Rohr (16) und dem äußeren Rohr (17) mehrere Abstandhalter (20) angeordnet sind, die eine direkte Berührung der Rohre (16, 17) verhindern.

11. Vorrichtung nach Anspruch 10, **dadurch gekennzeichnet, dass** die Abstandhalter (20) in regelmäßigen vertikalen Abständen zueinander angeordnet sind, vorzugsweise in 3 m Abständen.

12. Vorrichtung nach einem der Ansprüche 9 bis 11, **dadurch gekennzeichnet, dass** der innere Ringraum im unteren Endbereich (21) der Rohre (16, 17) durch eine zwischen den Rohren (16, 17) angeordnete Dichtung (22) abgedichtet ist.

13. Vorrichtung nach einem der vorhergehenden Ansprüche, **dadurch gekennzeichnet, dass** sie in einer nicht mehr für Förderzwecke verwendeten früheren Förderbohrung (3) untergebracht ist, insbesondere in einer offen gelassenen Bohrung der Erdgas- oder Erdölindustrie.

14. Vorrichtung nach einem der vorhergehenden Ansprüche, **dadurch gekennzeichnet, dass** sie in einer in Produktion befindlichen Bohrung, insbesondere der Erdgas- oder Erdölindustrie, untergebracht ist.

## Claims

1. Device for generating electrical energy from geothermal heat, comprising at least one thermal engine (8) which converts some of the heat from an underground thermal reservoir into mechanical energy and is connected to a coolant circuit (12, 13, 14, 15) for providing a temperature difference for a thermodynamic cycle, said device also comprising at least one electric generator (9) powered by the at least one thermal engine, the at least one thermal engine (8) and generator (9) being arranged underground in a borehole (3) or cavern, the electrical energy being conducted up to the ground surface to the electric load via electric cables (10), **characterised in that** cold coolant is conveyed from above ground to below ground to the thermal engine (8) via a coolant supply line (12) and the heated coolant is brought above ground from below ground via a coolant return line (13).

2. Device according to claim 1, **characterised in that** the thermal engine is a Stirling engine (8).

3. Device according to claim 1, **characterised in that** the thermal engine uses low-temperature evaporation processes, in particular the Organic Rankine cycle (ORC) or the Kalina cycle, and **in that** all stages of the respective process, including the recooling of the respective evaporation medium in a condenser, take place completely in a closed system underground.

4. Device according to either claim 2 or claim 3, **characterised in that** a Stirling engine (8) and a thermal engine, which operates on the basis of a low-temperature evaporation process, are both arranged underground and in series one behind the other in the heat flow.

5. Device according to any of the preceding claims, **characterised in that** a coolant pump (15) is arranged above ground.

6. Device according to any of claims 1 to 4, **characterised in that** a coolant pump is arranged underground.

7. Device according to claim 6, **characterised in that** the coolant pump is powered directly by the underground thermal engine in a mechanical manner.

8. Device according to any of the preceding claims, **characterised in that** the heat released above ground by the coolant is utilised, preferably for heating in a district heating network.

9. Device according to any of the preceding claims, **characterised in that** two concentrically arranged tubes (16, 17) are provided in the borehole (3) for transporting the coolant, an inner annulus (18) formed between an inner tube (16) and an outer tube (17) being filled with a heat-insulating material, preferably gas, in particular air, an outer annulus formed between the outer tube (17) and the inner lining (4) of the borehole (3) acting as the coolant return line (13) for transporting the heated coolant upwards from below ground to above ground, and the cold coolant flowing below ground from above ground by means of the inner tube (16) which acts as the coolant feed line (12).

10. Device according to claim 9, **characterised in that** a plurality of spacers (20) which prevent the tubes (16, 17) from coming into direct contact are arranged in the inner annulus between the inner tube (16) and the outer tube (17).

11. Device according to claim 10, **characterised in that** the spacers (20) are arranged at regular vertical distances from one another, preferably at 3 m intervals.

12. Device according to any of claims 9 to 11, **characterised in that** the inner annulus is sealed in the lower end region (21) of the tubes (16, 17) by a seal (22) arranged between the tubes (16, 17).

13. Device according to any of the preceding claims, **characterised in that** said device is accommodated in an existing production well (3) which is no longer used for mining purposes, in particular in a bore used in the gas and oil industries which has been left open.

14. Device according to any of the preceding claims, **characterised in that** said device is accommodated in a bore which is involved in production, particularly in the gas and oil industries.

## Revendications

1. Dispositif de production d'énergie électrique à partir de la géothermie avec au moins un moteur thermique (8) qui convertit de la chaleur amenée d'un réservoir thermique se trouvant sous terre en partie en énergie mécanique et est relié à un circuit de réfrigérant (12, 13, 14, 15) pour la mise à disposition d'une différence de température pour un circuit thermodynamique, et avec au moins un générateur (9) électrique entraîné par l'au moins un moteur thermique, l'au moins un moteur thermique (8) et le générateur (9) étant agencés sous terre dans un trou de sondage (3) ou une caverne et en ce que l'énergie électrique est acheminée par des câbles électriques (10) vers le consommateur vers la surface, **caractérisé en ce que** du réfrigérant froid est transporté de la surface par une conduite d'amenée de réfrigérant (12) vers le moteur thermique (8) sous terre et du réfrigérant réchauffé est transporté de sous terre par une conduite de retour de réfrigérant (13) vers la surface.

2. Dispositif selon la revendication 1, **caractérisé en ce que** le moteur thermique est un moteur Stirling (8).

3. Dispositif selon la revendication 1, **caractérisé en ce que** le moteur thermique utilise des processus d'évaporation à basse température, en particulier le cycle organique de Rankine (ORC) ou le cycle de Kalina et **en ce que** toutes les phases du processus respectif y compris le refroidissement de retour du fluide d'évaporation respectif dans un condensateur s'exécutent complètement dans un système fermé sous terre.

4. Dispositif selon l'une quelconque des revendications 2 à 3, **caractérisé en ce que** non seulement un moteur Stirling (8) mais aussi un moteur thermique travaillant sur la base d'un processus d'évaporation à basse température sont agencés sous terre et en série l'un derrière l'autre en flux thermique.

5. Dispositif selon l'une quelconque des revendications précédentes, **caractérisé en ce qu'**une pompe de réfrigérant (15) est agencée en surface.

6. Dispositif selon l'une quelconque des revendications 1 à 4, **caractérisé en ce qu'**une pompe de réfrigérant est agencée sous terre.

7. Dispositif selon la revendication 6, **caractérisé en ce que** la pompe de réfrigérant est entraînée mécaniquement sous terre directement par le moteur thermique.

8. Dispositif selon l'une quelconque des revendications précédentes, **caractérisé en ce que** la chaleur émise par le réfrigérant en surface est utilisée de préférence pour le chauffage dans un réseau de chauffage urbain.

9. Dispositif selon l'une quelconque des revendications précédentes, **caractérisé en ce que** deux tubes (16, 17) agencés concentriquement dans le trou de sondage (3) pour le transport de réfrigérant sont prévus, un espace annulaire (18) intérieur formé entre un tube intérieur (16) et un tube extérieur (17) étant rempli d'un matériau thermoisolant, de préférence du gaz, en particulier de l'air, un espace annulaire extérieur formé entre le tube extérieur (17) et le revêtement intérieur (4) du trou de sondage (3) servant de retour de réfrigérant (13) pour la montée du réfrigérant réchauffé de sous terre vers la surface et le réfrigérant froid s'écoulant de la surface sous terre par le tube intérieur (16) servant d'amenée de réfrigérant (12).

10. Dispositif selon la revendication 9, **caractérisé en ce que** plusieurs éléments d'écartement (20) sont agencés dans l'espace annulaire intérieur entre le tube intérieur (16) et le tube extérieur (17), lesquels empêchent un contact direct des tubes (16, 17).

11. Dispositif selon la revendication 10, **caractérisé en ce que** les éléments d'écartement (20) sont agencés à intervalles verticaux réguliers les uns par rapport aux autres, de préférence à intervalles de 3 m.

12. Dispositif selon l'une quelconque des revendications 9 à 11, **caractérisé en ce que** l'espace annulaire intérieur est rendu étanche dans la zone d'extrémité inférieure (21) des tubes (16, 17) par une garniture (22) agencée entre les tubes (16, 17).

13. Dispositif selon l'une quelconque des revendications précédentes, **caractérisé en ce qu'**il est logé dans un ancien puits productif (3) qui n'est plus utilisé à des fins de production, en particulier dans un trou laissé ouvert de l'industrie du gaz ou du pétrole.

14. Dispositif selon l'une quelconque des revendications précédentes, **caractérisé en ce qu'**il est logé dans un trou se trouvant en production, en particulier de l'industrie du gaz ou du pétrole.
